# EUROPÄISCHE PATENTANMELDUNG

(11) **EP 2 486 786 A1**
(43) Veröffentlichungstag der Anmeldung: **15.08.2012**
(21) Anmeldenummer: 11001168.1
(22) Anmeldetag: 14.02.2011
(51) Int. Cl.: A01G 17/02

(54) **Vorrichtung und Verfahren zum Entfernen von Pflanzenteilen von einer Wuchshilfe**

(71) Anmelder: ERO-GERÄTEBAU GmbH, 55469 Niederkumbd (DE)
(72) Erfinder: Peiter, Jens, 55469 Simmern (DE)
(74) Vertreter: Lemcke, Brommer & Partner

(57) **Zusammenfassung**

Die Erfindung betrifft eine Vorrichtung (1) zum Entfernen von Pflanzenteilen von mindestens einer länglichen, zugstabilen, biegeschlaffen Wuchshilfe (2) während einer Bewegung der Vorrichtung (1) entlang der Wuchshilfe (2), insbesondere zum Entfernen von Rebentrieben von mindestens einem Spalierdraht, umfassend eine Wuchshilfeführung (3), zum Führen der Wuchshilfe (2) während der Bewegung der Vorrichtung (1) entlang der Wuchshilfe (2), eine Ablöseeinheit (4) und eine Pflanzenführungseinheit (7) zum Komprimieren und/oder Zuführen der an der Wuchshilfe (2) anhaftenden Pflanzenteile zu der Ablöseeinheit, welche Ablöseeinheit (4) mindestens ein Ablöseelement umfasst, welches Ablöseelement derart beweglich an der Vorrichtung (1) angeordnet ist, dass bei Betrieb durch Bewegung des Ablöseelementes Pflanzenteile von der Wuchshilfe (2) zumindest teilweise ablösbar sind, gekennzeichnet dadurch, dass die Vorrichtung (1) zusätzlich mindestens eine Pflanzenausrichteinheit mit mindestens einem motorisch angetriebenen Pflanzentransportmittel (13) umfasst,
welche Pflanzenausrichteinheit vor der Pflanzenführungseinheit (7) angeordnet ist, hinsichtlich der Relativbewegung der Wuchshilfeführung zu der Vorrichtung (1) und
welche Pflanzenausrichteinheit derart angeordnet und dazu ausgebildet ist, mittels des Pflanzentransportmittels (13) von der Wuchshilfe (2) abstehende Pflanzenteile in Richtung einer bevorzugten Einzugsorientierung der Pflanzenführungseinheit (7) zu bewegen. Die Erfindung betrifft weiterhin ein Verfahren zum Entfernen von Pflanzenteilen.

## Beschreibung

Die Erfindung betrifft eine Vorrichtung und ein Verfahren zum Entfernen von Pflanzenteilen von mindestens einer länglichen, zugstabilen, biegeschlaffen Wuchshilfe während einer Bewegung der Vorrichtung entlang der Wuchshilfe gemäß den Oberbegriffen der Ansprüche 1 und 14.

Bei dem Anbau von Pflanzen sind längliche, zugstabile, biegeschlaffe Wuchshilfen wie beispielsweise Seile oder Drähte bekannt, um die Pflanzen zu stützen und/oder den Wuchs der Pflanzen zu beeinflussen. So ist beispielsweise im Weinbau die Verwendung von Spalierdrähten bekannt, beispielsweise bei der Guyot- und auch bei der Kordonerziehung.

Bei dem Anbau von Pflanzen mittels vorgenannter Wuchshilfen ist es typischerweise zu bestimmten Zeitpunkten wünschenswert, Pflanzenteile abzutrennen und die an den Wuchshilfen noch anhaftenden, abgetrennten Pflanzenteile zu entfernen. So ist es beispielsweise im Weinbau üblich, Rebentriebe abzutrennen, beispielsweise mittels eines motorisch angetriebenen Vorschneiders. Eine Vielzahl von abgetrennten Rebentrieben bleibt jedoch nach dem Abtrennen von der Rebenpflanze an der Wuchshilfe haften, aufgrund von Verrankung oder zumindest teilweisem Umschließen der Wuchshilfe durch den Rebentrieb oder einzelne Fortsätze des Rebentriebs.

Das Entfernen der an der Wuchshilfe anhaftenden Pflanzenteile erfolgt üblicherweise manuell und stellt einen aufwändigen, mühsamen Arbeitsvorgang dar.

Zur Vereinfachung dieses Vorgangs ist aus der DE 10 2004 031 088 A1 ein Verfahren bekannt, bei dem mittels zweier sich gegenläufig drehender Walzen abgeschnittene, jedoch noch am Spalierdraht anhaftende Rebentriebe erfasst und nach oben von dem Spalierdraht abgezogen werden. Hierbei ist es jedoch problematisch, sämtliche Rebentriebe mittels der Walzen zu erfassen und darüber hinaus können zumindest bei starker Verrankung der Rebentriebe starke Kräfte auf den Spalierdraht wirken, die zu Beschädigungen führen können.

Aus WO 2009/051498 A2 ist eine Vorrichtung und ein Verfahren zum Entfernen von Pflanzenteilen von einer Wuchshilfe bekannt, wobei die an der Wuchshilfe anhaftenden Pflanzenteile mittels einer Pflanzenzuführungseinheit komprimiert und/oder zu einer Ablöseeinheit zugeführt werden. Die Ablöseeinheit umfasst mindestens ein Ablöseelement wie beispielsweise ein rotierendes Schneidmesser, mittels dessen die Pflanzenteile zumindest teilweise von der Wuchshilfe abgelöst werden. Weiterhin wird die Wuchshilfe während des Bearbeitungsvorgangs mittels einer Wuchshilfeführung geführt, um insbesondere eine Beschädigung der Wuchshilfeführung durch das Ablöseelement zu vermeiden. Grundsätzlich ist es möglich, mittels dieser Vorrichtung im Weinbau nach dem händischen Schneiden der Reben die abgeschnittenen, noch an den Wuchshilfen anhaftenden Rebentriebe zu entfernen und auf die Verwendung eines motorisch angetriebenen Vorschneiders zu verzichten.

Grundsätzlich problematisch bei dem Entfernen von Pflanzenteilen von der Wuchshilfe ist, dass die Pflanzenteile unregelmäßig gewachsen und insbesondere nach einem Abschneiden von der Hauptpflanze in unterschiedlichsten Richtungen und in unterschiedlichen Längen von der Wuchshilfe abstehen können, so dass hohe Anforderungen an das Verfahren und die Vorrichtung zum Entfernen aller Ausgestaltungen der Pflanzenteile bestehen. Darüber hinaus können die Pflanzenteile durch Umwicklungen und/oder Verästelungen eine stabile Verbindung mit der Wuchshilfe aufweisen, die schwierig zu lösen ist.

Der vorliegenden Erfindung liegt daher die Aufgabe zugrunde, die vorbekannten Vorrichtungen und Verfahren zum Entfernen von Pflanzenteilen von einer Wuchshilfe zu verbessern und die Fehleranfälligkeit und daraus resultierende notwendige Unterbrechungen während des Betriebs zu verringern.

Gelöst ist diese Aufgabe durch eine Vorrichtung gemäß Anspruch 1 sowie ein Verfahren gemäß Anspruch 14. Vorteilhafte Ausgestaltungen der Vorrichtung finden sich in den Ansprüchen 2 bis 13. Eine vorteilhafte Ausgestaltung des Verfahrens findet sich in Anspruch 15. Hiermit wird der Wortlaut aller Ansprüche durch ausdrückliche Bezugnahme in die Beschreibung aufgenommen.

Die erfindungsgemäße Vorrichtung zum Entfernen von Pflanzenteilen von mindestens einer länglichen, zugstabilen, biegeschlaffen Wuchshilfe während einer Bewegung der Vorrichtung entlang der Wuchshilfe umfasst eine Wuchshilfeführung, zum Führen der Wuchshilfe während der Bewegung der Vorrichtung entlang der Wuchshilfe. Weiterhin umfasst die Vorrichtung eine Ablöseeinheit. Die Vorrichtung umfasst weiterhin eine Pflanzenführungseinheit zum Komprimieren und/oder Zuführen der an der Wuchshilfe anhaftenden Pflanzenteile zu der Ablöseeinheit.

Die Ablöseeinheit umfasst mindestens ein Ablöseelement, welches Ablöseelement derart beweglich an der Vorrichtung angeordnet ist, dass bei Betrieb durch Bewegung des Ablöseelementes Pflanzenteile von der Wuchshilfe zumindest teilweise ablösbar sind.

Wesentlich ist, dass die Vorrichtung zusätzlich mindestens eine Pflanzenausrichteinheit mit mindestens einem motorisch angetriebenen Pflanzentransportmittel umfasst. Die Pflanzenausrichteinheit ist vor der Pflanzenführungseinheit angeordnet, hinsichtlich der Relativbewegung der Wuchshilfeführung zu der Vorrichtung, das heißt, dass an der Wuchshilfe anhaftende Pflanzen während der Bewegung der Vorrichtung zunächst zu der Pflanzenausrichteinheit und danach zu der Pflanzenführungseinheit gelangen, gegebenenfalls unter Zwischenschaltung weiterer Zwischenelemente.

Die Pflanzenausrichteinheit ist derart angeordnet und dazu ausgebildet, mittels des Pflanzentransportmittels von der Wuchshilfe abstehende Pflanzenteile in Richtung einer bevorzugten Einzugsorientierung der Pflanzenführungseinheit zu bewegen.

Das erfindungsgemäße Verfahren zum Entfernen von Pflanzenteilen von mindestens einer länglichen, zugstabilen, biegeschlaffen Wuchshilfe während einer Bewegung mittels einer Vorrichtung während einer Bewegung der Vorrichtung entlang der Wuchshilfe umfasst folgende Verfahrensschritte:
- Komprimieren und/oder Zuführen von an der Wuchshilfe anhaftenden Pflanzenteilen mittels einer Pflanzenführungseinheit zu einer Ablöseeinheit,
- durch Bewegen eines Ablöseelementes der Ablöseeinheit **zumin**dest teilweises Ablösen der Pflanzenteile von der Wuchshilfe und
- Führen der Wuchshilfe während der Bewegung Vorrichtung entlang der Wuchshilfe mittels einer Wuchshilfeführung.

Wesentlich ist, dass vor dem Komprimieren und/oder zuführen der Pflanzenteile mittels der Pflanzenführungseinheit von der Wuchshilfe abstehende Pflanzenteile mittels eines motorisch angetriebenen Pflanzentransportmittels in Richtung einer bevorzugten Einzugsorientierung der Pflanzenführungseinheit bewegt werden.

Die Erfindung ist in der Erkenntnis des Anmelders begründet, dass insbesondere aufgrund des unregelmäßigen Wuchses in Bewegungsrichtung der Vorrichtung vor der Pflanzenführungseinheit häufig Störungen derart auftreten, dass sich Pflanzenteile vor der Pflanzenführungseinheit aufstauen oder zumindest in ungünstigen Einzugspositionen zum Komprimieren und/oder Zuführen durch die Pflanzenführungseinheit befinden. Hierdurch werden insbesondere folgende Fehler verursacht:

Durch das Aufstauen einer Vielzahl von Pflanzenteilen kann es zu unregelmäßigem Zuführen der Pflanzenteile mittels der Pflanzenführungseinheit zu der Ablöseeinheit kommen, so dass zunächst sich eine Vielzahl von Pflanzenteilen vor der Pflanzenführungseinheit aufstaut und anschließend diese Pflanzenteile in Form eines Knäuels oder großen Ballens der Ablöseeinheit zugeführt werden, so dass häufig aufgrund solch eines Knäuels oder Ballens die Wuchshilfe in einen ungünstigen Verlaufsweg abgelenkt wird, so dass insbesondere ein hohes Risiko besteht, dass die Wuchshilfe durch das Ablöseelement der Ablöseeinheit beschädigt, häufig durchtrennt wird.

Darüber hinaus kann bereits ein Aufstauen von Pflanzenteilen oder bereits eine ungünstige Orientierung von Pflanzenteile vor der Pflanzenführungseinheit dazu führen, dass trotz des Verwendens einer Wuchshilfeführung die Wuchshilfe in einen ungünstigen Verlaufsweg abgelenkt wird, so dass ebenso ein hohes Risiko besteht, dass die Wuchshilfe durch das Ablöseelement der Ablöseeinheit beschädigt, häufig durchtrennt wird.

Untersuchungen des Anmelders haben gezeigt, dass die Verwendung einer Pflanzenausrichteinheit, welche mittels mindestens eines motorisch angetriebenen Pflanzentransportmittels die Pflanzen zumindest in Richtung einer bevorzugten Einzugsorientierung der Pflanzenzuführungseinheit bewegt, die Bildung vorgenannter Staus und damit das Anhäufen vorgenannter Knäuel oder Ballen vermieden wird.

Durch die Hinzufügung der Pflanzenausrichteinheit zu der vorbekannten Vorrichtung wird somit in effektiver Weise eine typische Fehlerquelle nahezu vollständig ausgeschlossen, so dass durch diese Fehler begründete Betriebsunterbrechungen und Beschädigungen der Wuchshilfe ebenfalls nahezu ausgeschlossen sind.

Hierdurch wird das Verhältnis zwischen Betriebs- und Wartungsdauer der erfindungsgemäßen Vorrichtung erheblich verbessert und damit die Wirtschaftlichkeit erhöht.

Die erfindungsgemäße Vorrichtung bzw. eine vorteilhafte Ausgestaltung hiervon ist vorzugsweise zur Durchführung des erfindungsgemäßen Verfahrens bzw. einer vorzugsweisen Ausführungsform hiervon ausgebildet. Ebenso ist das erfindungsgemäße Verfahren bzw. eine vorzugsweise Ausführungsform hiervon vorzugsweise zur Durchführung mittels der erfindungsgemäßen Vorrichtung bzw. einer vorteilhaften Ausführungsform hiervon ausgebildet.

Vorzugsweise ist die Pflanzenausrichteinheit derart angeordnet und dazu ausgebildet, mittels des Pflanzentransportmittels von der Wuchshilfe abstehende Pflanzenteile zu drehen. Vorzugsweise erfolgt die Drehung um eine Drehachse, welche Drehachse in etwa mit der Längsachse der Wuchshilfe im Bereich der Pflanzenausrichteinheit übereinstimmt.

Untersuchungen des Anmelders haben gezeigt, dass typische Pflanzenzuführungseinheiten eine bevorzugte Einzugsorientierung hinsichtlich einer Erstreckung von Pflanzenteilen senkrecht zu der Wuchshilfe aufweisen. Durch Drehen solcher Pflanzenteile, die von der Wuchshilfe abstehen, insbesondere die hinsichtlich ihrer Längserstreckung senkrecht oder in einem nicht vernachlässigbaren Winkel, (beispielsweise > 30°) von der Wuchshilfe abstehen, wird die Funktion der Pflanzenführungseinheit durch eine Ausrichtung solcher Pflanzenteile erheblich verbessert. Hierbei ist es wünschenswert, die Pflanzenteile möglichst in die bevorzugte Einzugsorientierung zu bringen. Eine Verbesserung wird jedoch auch dann bereits erzielt, wenn die Pflanzenteile lediglich über eine gewisse Teilstrecke in Richtung der bevorzugten Einzugsorientierung bewegt werden.

Da die Pflanzenteile an der Wuchshilfe anhaften und ein Ablösen von der Wuchshilfe oder einer Relativverschiebung der Pflanzenteile zu der Wuchshilfe mittels der Pflanzenausrichteinheit in der Regel nicht möglich ist, ist es vorteilhaft, wie zuvor beschrieben mittels des Pflanzentransportmittels die abstehenden Pflanzenteile zu drehen. Denn auch solche Pflanzenteile, die durch Verästelungen oder um Windungen stabil mit der Wuchshilfe verbunden sind, lassen sich in der Regel durch geringe Krafteinwirkung drehen, insbesondere um eine Drehachse, welche in etwa mit der Längsachse der Wuchshilfe im Bereich der Pflanzenausrichteinheit übereinstimmt.

Durch das vorgeschaltete Drehen insbesondere von der Wuchshilfe abstehender Pflanzenteile, welche sich in einer ungünstigen Orientierung hinsichtlich des Einzugs durch die Pflanzenzuführungseinheit befinden, wird somit in einfacher Weise die Fehleranfälligkeit der erfindungsgemäßen Vorrichtung und des erfindungsgemäßen Verfahrens erheblich verringert.

Untersuchungen des Anmelders haben ergeben, dass das Pflanzentransportmittel vorzugsweise als lineares Fördermittel ausgebildet ist. Hierdurch ergibt sich ein robuster und kostengünstiger Aufbau des Fördermittels und gleichzeitig eine effiziente und fehlerunanfällige Orientierung von der Wuchshilfe abstehender Pflanzenteile in Richtung einer bevorzugten Einzugsorientierung der Pflanzenzuführungseinheit.

Es liegt im Rahmen der Erfindung, typische, dem Fachmann bekannte lineare Fördermittel zu verwenden, beispielsweise Förderbänder oder Rollenbahnen.

Insbesondere vorteilhaft ist jedoch die Ausbildung des Pflanzentransportmittels als Förderschnecke. Untersuchungen des Anmelders haben ergeben, dass eine Förderschnecke robust und gleichzeitig kostengünstig ausbildbar ist, beispielsweise durch die an sich bekannten in Metall ausgebildeten Förderschnecken, welche mittels eines Motors, wie beispielsweise eines Hydraulikmotors oder eines Elektromotors, um die Symmetrieachse der Schneckenwelle gedreht werden.

Durch eine solche Schnecke wird in einfacher Weise ein linearer Transport des Teilbereiches des Pflanzenteils, welcher mit der Schnecke in Berührung kommt, erzielt. Durch den linearen Transport wird in einfacher Weise aufgrund des Anhaftens des Pflanzenteils an der Wuchshilfe eine Drehung des Pflanzenteils um die Wuchshilfe erzielt. Die Ausbildung des Pflanzentransportmittels als Förderschnecke weist darüber hinaus den Vorteil auf, dass im Falle einer Umwicklung der Förderschnecke durch Pflanzen oder andere Objekte eine solche in kurzer Zeit manuell behoben werden kann und darüber hinaus nur eine geringe Verletzungsgefahr besteht, selbst wenn ein Benutzer im Betrieb mit der sich drehenden Förderschnecke in Berührung kommen sollte.

Die Förderschnecke ist vorzugsweise an einem Ende, bevorzugt an beiden Enden konisch zulaufend ausgebildet. Dies bedeutet, dass in axialer Richtung zu dem jeweiligen Ende hin sich die Ganghöhe der Schnecke verringert. Untersuchungen des Anmelders haben gezeigt, dass durch ein solches konisches Zulaufen Fehler aufgrund eines Umwickelns der Schnecke durch Pflanzenteile nahezu ausgeschlossen werden.

Die Pflanzenausrichteinheit umfasst vorzugsweise einen motorischen Antrieb zum Drehen der Förderschnecke. Untersuchungen des Anmelders haben ergeben, dass insbesondere ein Drehen der Förderschnecke mit einer Umdrehungsgeschwindigkeit im Bereich 100 U/min bis 400 U/min, bevorzugt im Bereich 200 U/min bis 250 U/min vorteilhaft ist.

Weiterhin ist es vorteilhaft, dass die Förderschnecke einen Durchmesser im Bereich 3 cm bis 25 cm, bevorzugt im Bereich 5 cm bis 22 cm, weiter bevorzugt im Bereich 9 cm bis 20 cm aufweist.

Weiterhin ist es vorteilhaft, dass die Förderschnecke eine Ganghöhe im Bereich 10 cm bis 15 cm, bevorzugt etwa 12,5 cm aufweist.

Die vorgenannten vorteilhaften Ausgestaltungen ergeben jeweils für sich genommen und insbesondere in Kombination zweier oder mehrerer der vorgenannten vorteilhaften Ausgestaltungen ein optimiertes Förderverhalten der Förderschnecke für die Pflanzenteile.

Vorzugsweise ist das als lineares Fördermittel ausgebildete Pflanzentransportmittel mit Förderrichtung in einem vorgegebenen Winkel zu der bevorzugten Einzugsorientierung der Pflanzenführungseinheit angeordnet. Untersuchungen des Anmelders haben ergeben, dass insbesondere eine Anordnung in einem Winkel im Bereich 3° bis 20°, bevorzugt im Bereich 5° bis 15°, weiter bevorzugt etwa 9° vorteilhaft ist. Durch die vorgenannten vorzugsweisen Anstellwinkel bei Draufsicht von vorne auf die erfindungsgemäße Vorrichtung wird erzielt, dass bei Drehen der Pflanzenteile um die Wuchshilfe diese möglichst weit in Richtung der bevorzugten Einzugsorientierung durch das lineare Fördermittel gedreht werden.

Hierbei liegt es im Rahmen der Erfindung, dass der Winkel zwischen Förderrichtung des linearen Fördermittels und der bevorzugten Einzugsorientierung der Pflanzenführungseinheit durch einen Benutzer wahlweise vorgebbar ist, insbesondere dass das lineare Fördermittel schwenkbar und wahlweise feststellbar an der Vorrichtung angeordnet ist. Hierdurch kann der Benutzer den vorgenannten Winkel gegebenenfalls optimieren.

Es liegt im Rahmen der Erfindung, dass bei Draufsicht von vorne in einer Ebene senkrecht zur Längserstreckung der Wuchshilfe eine Drehung der Pflanzenteile durch das lineare Fördermittel in oder entgegen des Uhrzeigersinns erfolgt. Untersuchungen des Anmelders haben ergeben, dass vorzugsweise das lineare Fördermittel derart ausgebildet ist, dass bei Betrieb von dem Fördermittel erfasste Teilbereiche der Pflanzenteile nach oben bewegt werden. Hierdurch wird der Kontakt zwischen Pflanzenteil und linearem Fördermittel verbessert und dadurch das Einwirken und die Ausrichtung optimiert.

Der lineare Förderweg des Fördermittels weist vorzugsweise eine Länge im Bereich von 0,3 m bis 1,2 m, bevorzugt im Bereich 0,5 m bis 0,7 m auf. Untersuchungen des Anmelders haben ergeben, dass größere Längen die Handhabung der Vorrichtung erheblich erschweren und kleinere Längen keine ausreichende Bewegung der Pflanzenteile in Richtung der bevorzugten Einzugsorientierung ermöglichen.

Ebenso liegt es im Rahmen der Erfindung, den linearen Förderweg auf zwei oder mehr Förderelemente aufzuteilen, beispielsweise durch Aneinanderreihung zwei oder mehrere linearer Fördermittel. Insbesondere ist es vorteilhaft, zwischen den Fördermitteln in einer Ebene senkrecht zur Längserstreckung der Wuchshilfe einen Winkel im Bereich 5° bis 45°, bevorzugt im Bereich 10° bis 20°, weiter bevorzugt etwa 15° vorzusehen. Hierdurch wird eine Kreisbewegung senkrecht zu der Wuchshilfe, welche Kreisbewegung ein von dem Fördermittel linear bewegtes Pflanzenteil ausführt, angenähert.

Der Abstand der Pflanzenausrichteinheit senkrecht zu einer die Pflanzenführungseinheit durchlaufenden Wuchshilfe ist vorzugsweise < 50 cm und liegt bevorzugt im Bereich zwischen 5 cm und 30 cm, weiter bevorzugt im Bereich zwischen 10 cm und 20 cm zu der Wuchshilfe. Hierdurch ist gewährleistet, dass einerseits keine Knäuel oder Ballen mit den vorgenannten negativen Folgen entstehen und andererseits Pflanzenzeile, die problemlos von der Pflanzenführungseinheit eingezogen werden, nicht unnötigerweise von der Pflanzenausrichteinheit beaufschlagt werden.

Hinsichtlich des Abstandes in Richtung der Längserstreckung einer die Pflanzenführungseinheit durchlaufenden Wuchshilfe ist das Pflanzentransportmittel vorzugsweise mit einem Abstand < 50 cm, bevorzugt im Bereich zwischen 5cm und 30 cm, weiter bevorzugt im Bereich zwischen 10 cm und 20 cm zu der Pflanzenführungseinheit angeordnet. Hierdurch wird ein nachträgliches Verrutschen oder Verdrehen der Pflanzenteile nach Beaufschlagung durch das Pflanzentransportmittel nahezu vermieden.

Das erfindungsgemäße Verfahren und die erfindungsgemäße Vorrichtung sind insbesondere zum Entfernen von Rebentrieben von mindestens einem Spalierdraht im Weinbau geeignet. Insbesondere von solchen Rebentrieben, die zwar von der Rebe abgeschnitten sind, jedoch noch an dem Spalierdraht anhaften, wie typischerweise Rebentriebe nach dem händischen Vorschnitt.

Ebenso ist die erfindungsgemäße Vorrichtung und das erfindungsgemäße Verfahren auch bei anderen Pflanzenerziehungen anwendbar, bei denen Pflanzenteile an einer länglichen, zugstabilen, biegeschlaffen Wuchshilfe anhaften, insbesondere bereits von der Hauptpflanze abgetrennte Pflanzenteile.

Die erfindungsgemäße Vorrichtung umfasst vorzugsweise eine Haltevorrichtung, mittels dessen die Vorrichtung an einem Fahrzeug wie beispielsweise einem Traktor angeordnet ist. Vorzugsweise ist die Haltevorrichtung derart ausgebildet, dass die Vorrichtung zum Entfernen hinsichtlich der Höhe und des seitlichen Abstands zu dem Fahrzeug wahlweise bewegt werden kann. Solche Haltevorrichtungen sind bei Traktoren bereits bekannt.

Die Pflanzenführungseinheit der erfindungsgemäßen Vorrichtung umfasst vorzugsweise in an sich bekannter Weise ein Einzugsrad. Untersuchungen des Anmelders haben ergeben, dass ein solches Einzugsrad eine bevorzugte Einzugsrichtung aufweist, welche in etwa senkrecht zu der Drehachse des Einzugsrades steht.

Vorzugsweise sind Ablöseeinheit und Wuchshilfeführung derart zusammenwirkend ausgebildet, dass bei Betrieb das Ablöseelement im Bereich der Drehachse einen Abstand in Axialrichtung im Bereich von 5 mm bis 30 mm, bevorzugt im Bereich von 10 mm bis 20 mm, weiter bevorzugt etwa 15 mm zu der Wuchshilfe aufweist.

Es ist insbesondere vorteilhaft, die erfindungsgemäße Vorrichtung grundsätzlich nach der Vorrichtung gemäß WO 2009/051498 A2 bzw. einer vorzugsweisen Ausführungsform hiervon auszubilden. Auf diesen Stand der Technik wird vollumfänglich Bezug genommen und er wird ausdrücklich vollumfänglich per Referenz eingebunden. Die Weiterbildung der vorbekannten Vorrichtung besteht insbesondere in dem Anordnen der Pflanzenausrichteinheit vor der Pflanzenführungseinheit gemäß der erfindungsgemäßen Vorrichtung.

Die Pflanzenführungseinheit der erfindungsgemäßen Vorrichtung ist vorzugsweise zum Führen der Wuchshilfe ausgebildet, insbesondere das Einzugsrad ist vorzugsweise mit einem sich hinsichtlich der Drehachse axial von den Seiten des Einzugsrades jeweils zur Mitte hin verringernden Durchmesser ausgebildet, so dass eine mittige Führung der Wuchshilfe in axialer Richtung der Drehachse des Einzugsrades gewährleistet ist.

Als vorzugsweise Ausführungsform der erfindungsgemäßen Vorrichtung wird insbesondere auf die Figuren 1 bis 11 der WO 2009/051498 und der dazugehörigen Figurenbeschreibung Bezug genommen, wobei einer solchen vorzugsweisen Ausführungsform wie zuvor ausgeführt eine Pflanzenausrichteinheit vor der Pflanzenzuführungseinheit hinzuzufügen ist.

Weitere Vorteile und Eigenschaften der vorliegenden Erfindung werden im Folgenden anhand von einem Ausführungsbeispiel und den Figuren erläutert. Dabei zeigt:
- Figur 1: ein Ausführungsbeispiel der erfindungsgemäßen Vorrichtung in Seitenansicht mit dargestellten Wuchshilfen, wobei die Seitenansicht gemäß Figur 1 bei Anordnen der Vorrichtung an eine Haltevorrichtung die der Haltevorrichtung abgewandte Seite zeigt;
- Figur 1a: eine Schnittdarstellung der Seitenansicht gemäß Figur 1, wobei die Schnittebene in der Rückansicht gemäß Figur 5 als Linie A gekennzeichnet ist; die Schnittebene steht senkrecht zur Zeichenebene gemäß Rückansicht in Figur 5;
- Figur 2: eine Seitenansicht der einer Haltevorrichtung zugewandten Seite;
- Figur 3: eine Vorderansicht der Vorrichtung gemäß Figur 1 mit dargestellten Wuchshilfen;
- Figur 4: eine Draufsicht von oben auf die Vorrichtung gemäß Figur 1;
- Figur 4a: die Draufsicht gemäß Figur 4, wobei eine obere Abdeckung sowie ein oberes Einzugsrad entfernt wurden und Wuchshilfen dargestellt sind;
- Figur 4b: eine Schnittdarstellung gemäß Schnittlinie B in Figur 3, wobei die Schnittebene in Figur 3 senkrecht zur Zeichenebene steht;
- Figur 5: eine Ansicht von hinten auf die Vorrichtung gemäß Figur 1 und
- Figur 6: eine perspektivische Darstellung der Vorrichtung gemäß Figur 1.

Sämtliche Figuren zeigen eine Vorrichtung 1, zum Entfernen von Pflanzenteilen von mindestens einer länglichen, zugstabilen, biegeschlaffen Wuchshilfe, welche Vorrichtung ein Ausführungsbeispiel der erfindungsgemäßen Vorrichtung darstellt. Gleiche Bezugszeichen in den Figuren bezeichnen gleiche Elemente.

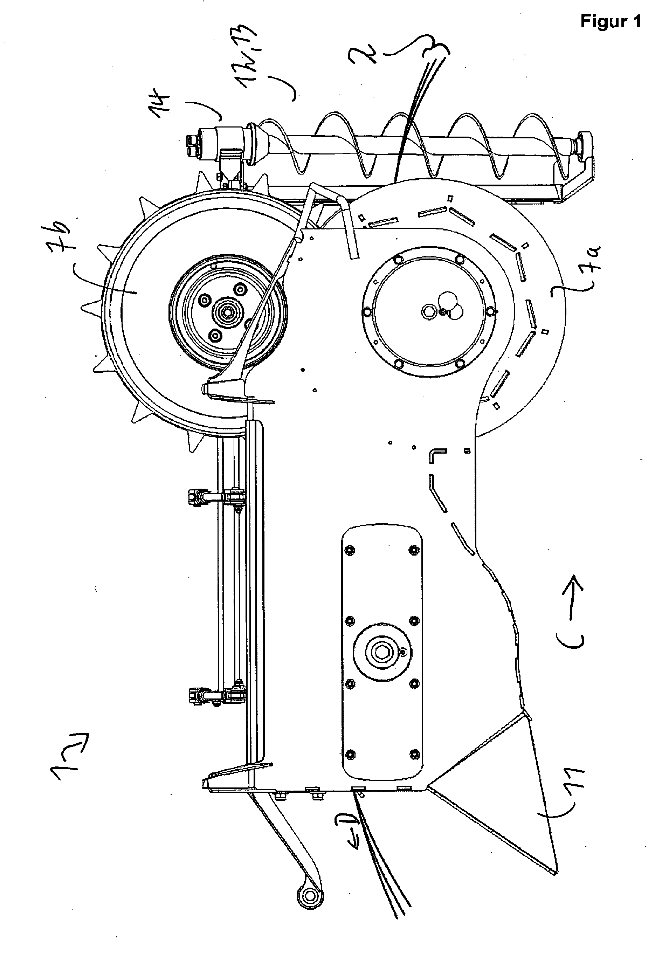

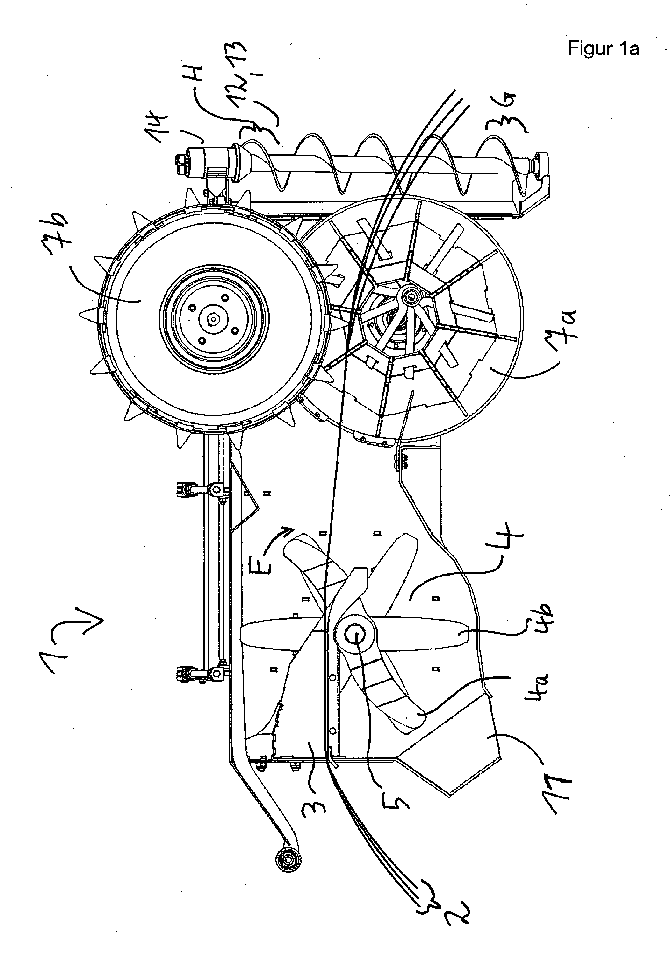

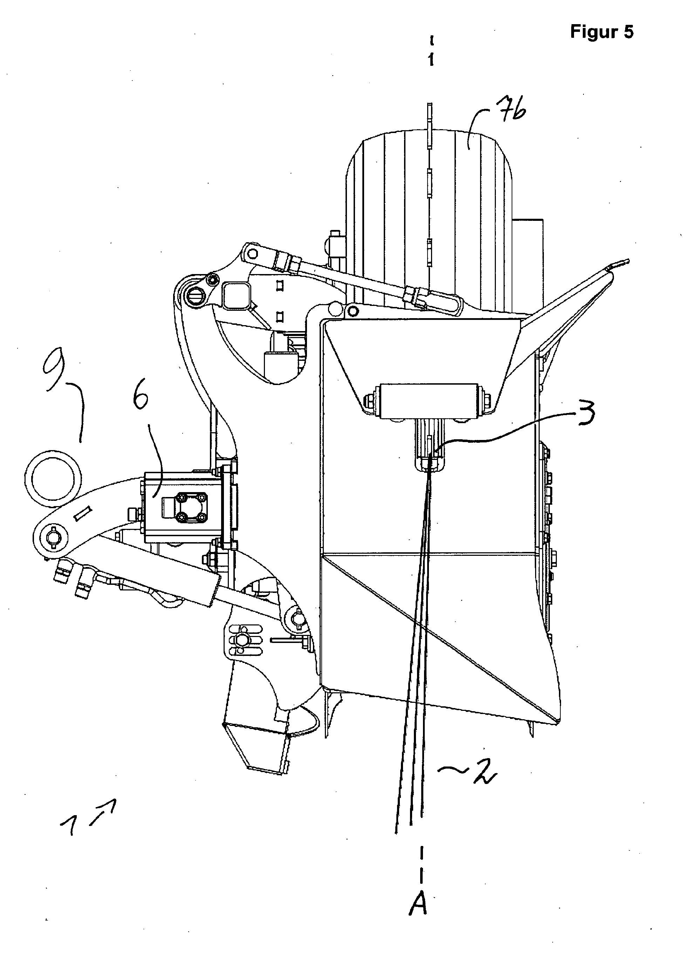

Die Vorrichtung 1 ist zum Entfernen von Pflanzenteilen von beliebigen länglichen, zugstabilen, biegeschlaffen Wuchshilfen geeignet, wie beispielsweise von Seilen oder Drähten. Insbesondere ist die Vorrichtung 1 zum Einsatz im Weinbau geeignet, um Rebentriebe, welche von der Rebe abgeschnitten sind, jedoch noch an als Spalierdrähten ausgebildeten Wuchshilfen 2 anhaften, zu entfernen. In den Figuren 1, 1a, 3, 4a und 5 sind zum besseren Verständnis jeweils drei Wuchshilfen 2 dargestellt.

Die Vorrichtung 1 umfasst eine Wuchshilfeführung 3, welche als nach oben offener Führungskanal mit einem in etwa U-förmigen Querschnitt senkrecht zur Längsachse einer in der Wuchshilfeführung 3 liegenden Wuchshilfe 2 ausgebildet ist. Mittels der Wuchshilfeführung 3 werden die Wuchshilfen 2 insbesondere im Bereich einer Ablöseeinheit 4 der Vorrichtung 1 geführt. Dies ist insbesondere in den Figuren 1a, 4a und 3 ersichtlich.

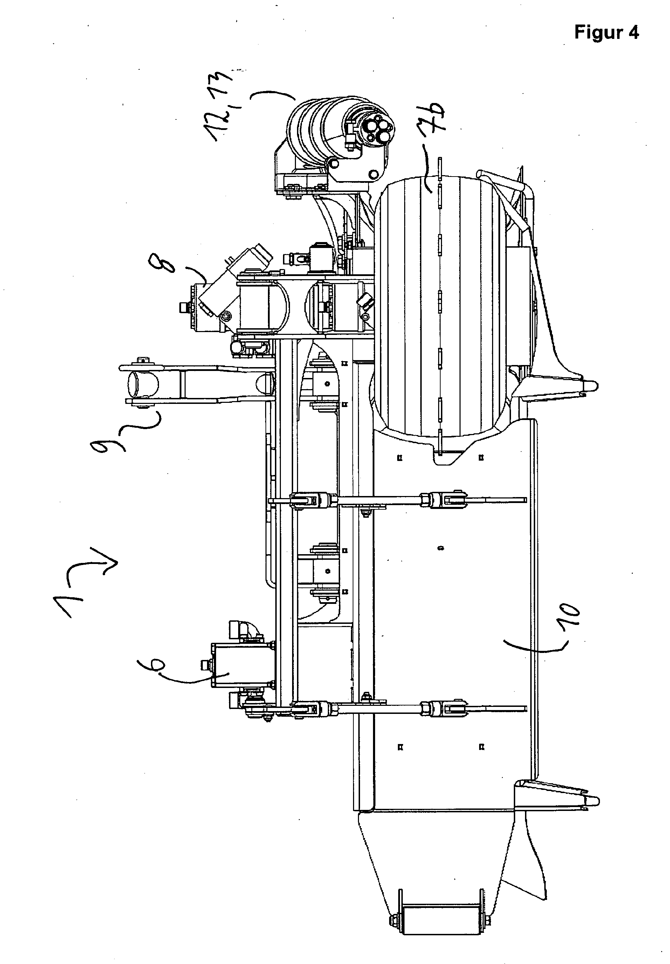

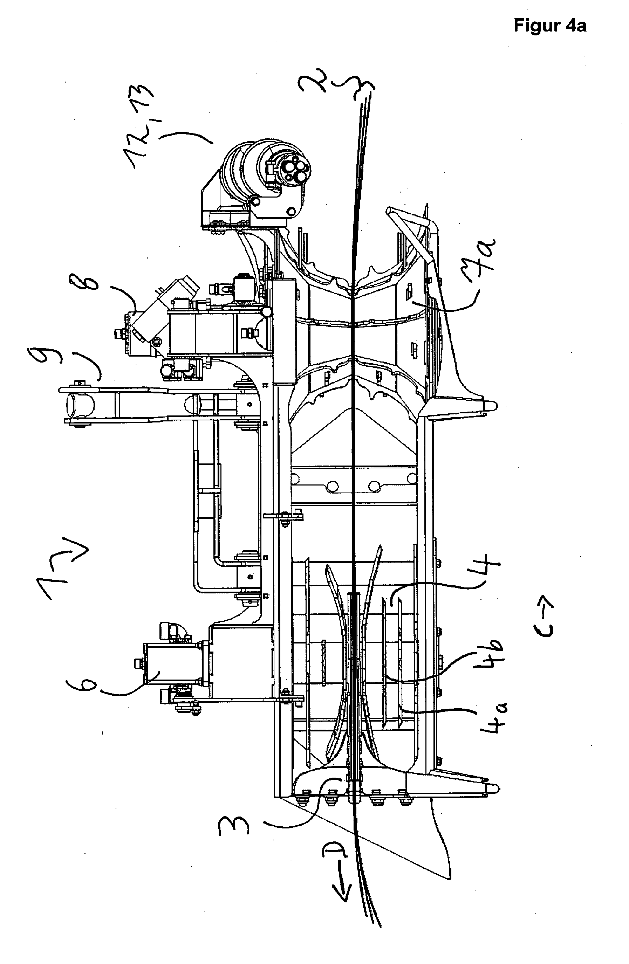

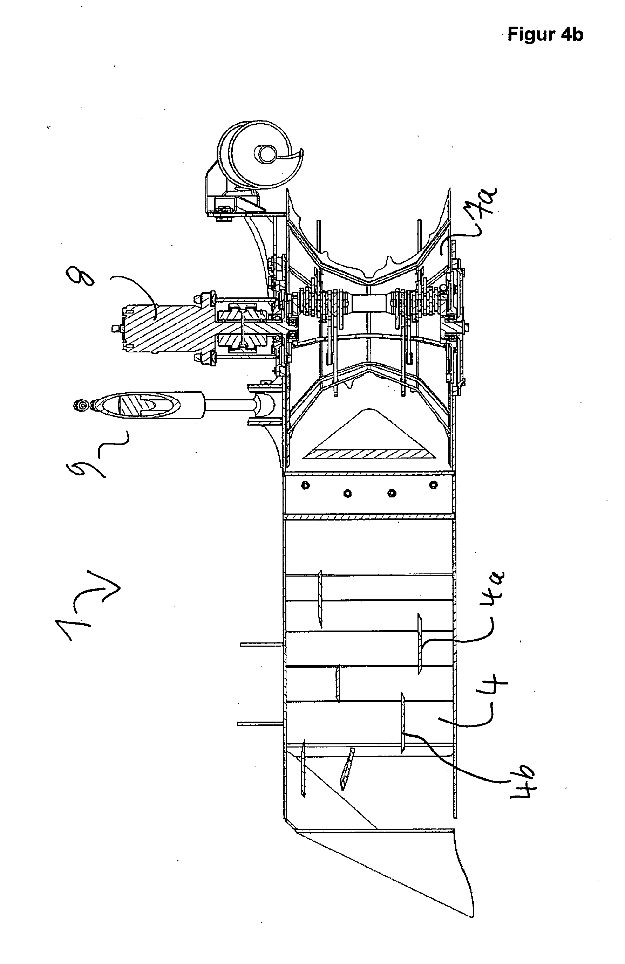

Die Ablöseeinheit 4 umfasst eine Vielzahl von Ablöseelementen, von denen in Figur 1a, Figur 4a und 4b exemplarisch zwei Ablöseelemente 4a und 4b gekennzeichnet sind. Die Ablöseelemente sind jeweils als Schneidmesser ausgebildet, welche an einer gemeinsamen Welle 5 angebracht sind und mittels eines ersten Motors 6 in Rotation versetzt werden können.

Die Vorrichtung 1 umfasst weiterhin eine Pflanzenführungseinheit 7, welche ein unteres Einzugsrad 7a und ein oberes Einzugsrad 7b umfasst.

Die Einzugsräder 7a und 7b werden mittels eines zweiten Motors 8 gegensinnig angetrieben.

Zur Verwendung der Vorrichtung 1 wird diese mittels einer seitlich angeordneten Halterung 9 an einer (nicht dargestellten) Haltevorrichtung angebracht, welche Haltevorrichtung wiederum an einem (nicht dargestellten) Traktor angebracht ist. Mittels der Haltevorrichtung kann die Vorrichtung 1 bezüglich der Höhe variiert werden sowie bezüglich der seitlichen Ausrichtung in Fahrtrichtung rechts vor dem Traktor.

Zur Verwendung der Vorrichtung in einem Weinberg, beispielsweise mit Guyot-und/oder Kordonerziehung (wobei diese Beispiele nicht einschränkend sind), müssen entweder die betreffenden Spalierdrähte per Hand von den Haltepfosten entlang einer Weinrebenzeile entfernt werden oder mittels entsprechender Haltevorrichtungen, wie beispielsweise nach oben offenen Klemmhaken, an den Haltepfosten angebracht sein, so dass sie nach oben abgezogen werden können. An dem ersten und letzten Pfosten einer Weinrebenzeile sind die Spalierdrähte unlösbar angebracht.

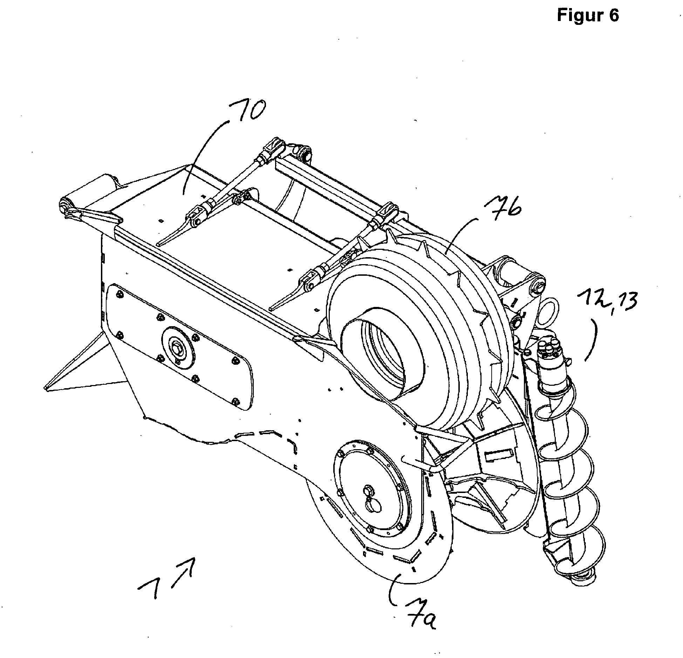

Zu Beginn wird die Vorrichtung in eine Position nahe des ersten Pfosten gebracht und das obere Einzugsrad 7b sowie eine obere Abdeckung 10 (siehe Figuren 4 und 6) werden durch Verschwenken weggeklappt, so dass sich die Draufsicht gemäß Figur 4a ergibt (wobei die weggeklappten Elemente nicht dargestellt sind) und die Spalierdrähte 2 von oben auf das untere Einzugsrad 7a gelegt und in die Wuchshilfeführung 3 von oben eingeführt werden. Anschlie-βend werden obere Abdeckung 10 und oberes Einzugsrad 7b wieder in die ursprüngliche Position gebracht.

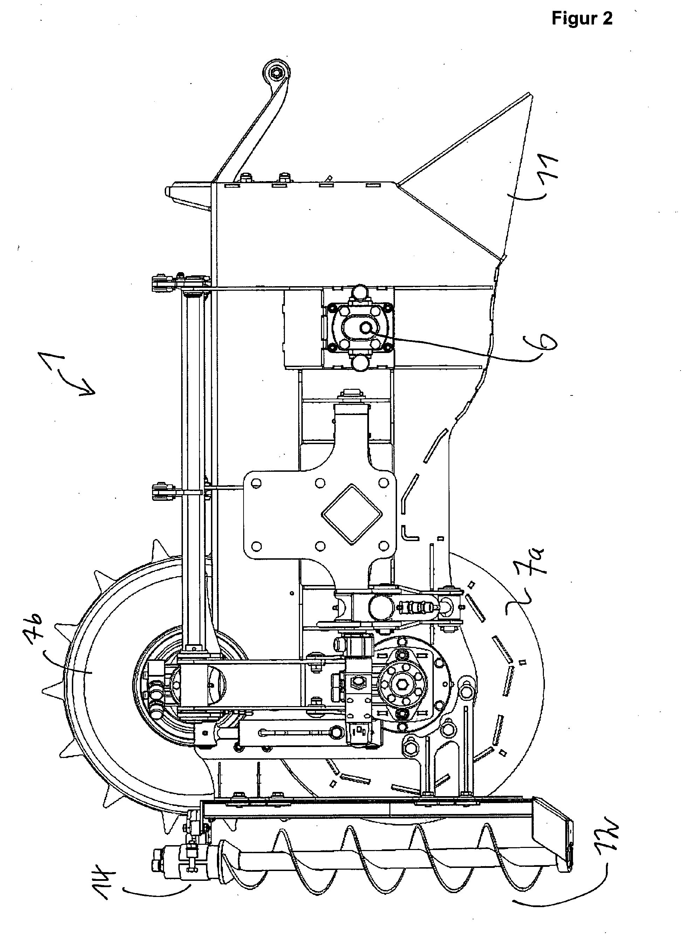

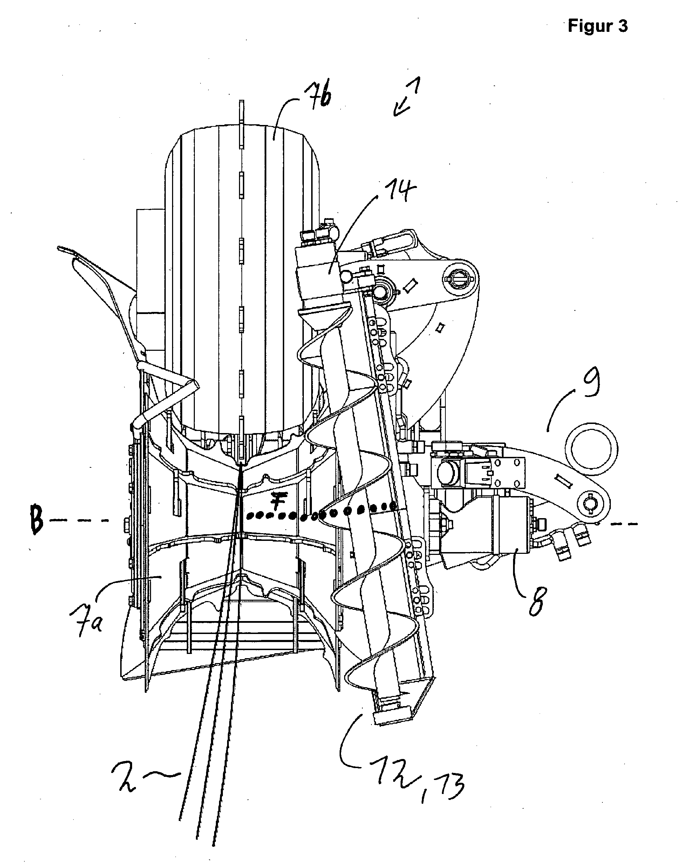

Die Wuchshilfen 2 verlaufen somit zwischen oberem Einzugsrad 7b und unterem Einzugsrad 7a (siehe Figur 3) und durch die Wuchshilfeführung 3 hindurch und somit ebenfalls zwischen den Ablöseelementen der Ablöseeinheit 4 hindurch (siehe Figuren 2a und 4a). Die beiden Ablöseelemente, zwischen denen die Wuchshilfe geführt ist, weisen vorzugsweise zueinander einen Abstand in Axialrichtung im Bereich von 10 mm bis 50 mm, bevorzugt im Bereich von 20 mm bis 40 mm, insbesondere bevorzugt im Bereich vorn 25 mm bis 35 mm, weiter bevorzugt etwa 30 mm auf. Weiter bevorzugt wird die Wuchshilfe in etwa mittig zwischen diesen beiden Ablöseelementen geführt. In dem hier beschriebenen Ausführungsbeispiel weisen die beiden Ablöseelemente 4, zwischen denen die Wuchshilfen 2 in etwa mittig geführt sind, einen Abstand zueinander in Axialrichtung von 31 mm auf.

Anschließend wird mittels des Traktors die Vorrichtung 1 oberhalb der Pfosten der Weinrebenzeile entlanggefahren, so dass die Spalierdrähte 2 nach oben aus den Halterungen der Pfosten herausgezogen werden, sofern sie nicht bereits vorher aus entsprechenden Halterungen entfernt wurden. Der Traktor fährt nun entlang der Weinrebenzeile, so dass die Wuchshilfen 2 während dieser Bewegung durch die Vorrichtung 1 hindurchgeleitet werden. In den Figuren 1 und 4a ist die Bewegungsrichtung der Vorrichtung durch einen Pfeil C gekennzeichnet und die Relativbewegung der Wuchshilfen 2 zu der Vorrichtung 1 durch einen Pfeil D, welche Relativbewegung entsprechend entgegengesetzt zu der Bewegungsrichtung C der Vorrichtung 1 verläuft.

An den Spalierdrähten anhaftende Pflanzenteile, insbesondere Rebentriebe werden somit zwischen den Einzugsrädern 7a und 7b hindurchgeführt und hierbei gegebenenfalls durch Zusammendrücken komprimiert und zu der Ablöseeinheit 4 (zusammen mit dem sich relativ zu der Vorrichtung 1 hindurchbewegenden Wuchshilfen 2) zugeführt.

Die als Schneidmesser ausgebildeten, rotierenden Ablöseelemente 4a, 4b lösen die Pflanzenteile von den Wuchshilfen 2 ab, durch Häckseln, Abschlagen und/oder Zerstückeln.

Mittels der Wuchshilfeführung 3 wird gewährleistet, dass die Wuchshilfen 2 nicht mit den Ablöseelementen 4a, 4b der Ablöseeinheit 4 in Kontakt kommen und somit nicht durch diese beschädigt und insbesondere nicht durchtrennt werden.

Die Ablöseelemente 4a, 4b rotieren hierbei in der Ansicht in Figur 1 a im Uhrzeigersinn, wie. durch Pfeil E gekennzeichnet. Dies bedeutet, dass insbesondere oberhalb der Welle 5 sich die Ablöseelemente 4a, 4b in entgegengesetzter Richtung zu der Wuchshilfe 2 und an der Wuchshilfe anhaftender Pflanzenteile bewegen. Hierdurch wird ein besonders effizientes Ablösen gewährleistet.

Die abgelösten Pflanzenteile werden an einem Auslass 11 (siehe Figuren 1, 1 a und 2) ausgegeben.

Nachdem in einer Weinrebenzeile die Pflanzenteile von den Wuchshilfen 2 entfernt wurden, werden die Wuchshilfen 2 wieder in entsprechenden Halterungen an den Pfosten der Weinrebenzeile befestigt.

Ergänzend wird insbesondere zur Durchführung des Verfahrens auf WO 2009/051498, insbesondere Seite 26, Zeile 25 bis Seite 27, Zeile 29 Bezug genommen.

Die Pflanzenführungseinheit 7 ist aufgrund der Ausgestaltung mit dem unteren Einzugsrad 7a und dem oberen Einzugsrad 7b, welche parallele Drehachsen aufweisen, insbesondere zum Einzug von Pflanzenteilen, welche sich in etwa entlang der Wuchshilfen 2 erstrecken sowie von Pflanzenteilen, welche in der Vorderansicht gemäß Figur 3 in etwa senkrecht stehen, das heißt Pflanzenteile, deren Längserstreckung zumindest in Projektion auf eine Ebene senkrecht zu den Wuchshilfen 2 in etwa senkrecht zu der Drehachse des unteren Einzugsrades 7a und damit auch senkrecht zur Drehachse des oberen Einzugsrades 7b steht.

Bei von den Wuchshilfen 2 abstehenden Pflanzenteilen, die zumindest in Projektion auf eine senkrecht zu den Wuchshilfen 2 stehende Ebene eine in der Darstellung in Figur 3 waagrechte Komponente aufweisen, insbesondere bei senkrecht und in der Ansicht in Figur 3 waagrecht von den Wuchshilfen 2 abstehenden Pflanzenteilen erfolgt jedoch nur ein verlangsamter oder kein Einzug solcher Pflanzenteile durch die Pflanzenführungseinheit 7. Hier besteht erhebliche Gefahr, dass sich Pflanzenteile vor der Pflanzenführungseinheit 7 aufgrund der "querstehenden" Pflanzenteile aufstauen und entlang den Wuchshilfen 2 mit der Vorrichtung 1 in Fahrtrichtung des Traktors verschoben werden, um dann gegebenenfalls wie eingangs beschrieben als Knäuel oder Ballen eingezogen zu werden, wodurch eine erhebliche Gefahr eines Verrutschens der Wuchshilfen 2 in den Einzugsbereich der Ablöseelemente der Ablöseeinheit 4 besteht.

Die Vorrichtung 1 umfasst daher eine Pflanzenausrichteinheit 12. Die Pflanzenausrichteinheit 12 umfasst ein als Förderschnecke ausgebildetes Pflanzentransportmittel 13. Das Pflanzentransportmittel 13 stellt somit ein lineares Fördermittel dar. Die Pflanzenausrichteinheit 12 umfasst weiterhin eine Halterung, in der das Pflanzentransportmittel 13 drehbar gelagert ist sowie einen dritten Motor 14 zum Drehen der Förderschnecke des Pflanzentransportmittels der Pflanzenausrichteinheit 12 um die Achse der Förderschnecke.

Die Pflanzenausrichteinheit 12 ist vor der Pflanzenführungseinheit 7 angeordnet, hinsichtlich der Relativbewegung der Wuchshilfeführung zu der Vorrichtung. An den Wuchshilfen 2 anhaftende Pflanzenteile gelangen somit zuerst in den Wirkungsbereich der Pflanzenausrichteinheit 12 und danach in den Wirkungsbereich der Pflanzenführungseinheit 7.

Seitlich von den Wuchshilfen 2 abstehende Pflanzenteile können somit von dem Pflanzentransportmittel 13 erfasst und bewegt werden.

Die Drehrichtung ist dabei derart gewählt, dass die von dem Pflanzentransportmittel 13 erfassten Pflanzenteile in Figur 3 nach oben bewegt werden.

Die lineare Bewegung solcher Pflanzenteile mittels des Pflanzentransportmittels 13 bewirkt typischerweise ein Drehen dieses Pflanzenteils um die Längsachse der Wuchshilfen 2, das heißt eine Drehung gegen den Uhrzeigersinn in der Ansicht gemäß Figur 3. Beispielhaft ist in Figur 3 als gepunktete Linie ein Pflanzenteil F schematisch dargestellt, welcher in etwa senkrecht zu den Wuchshilfen 2 und waagrecht gemäß der Darstellung in Figur 3 absteht. Der Pflanzenteil F wird von dem Pflanzentransportmittel 13 erfasst und mit seinem in Figur 3 rechten Ende nach oben bewegt, so dass das Pflanzenteil F eine Drehung um die Wuchshilfen 2 gegen den Uhrzeigersinn in der Darstellung gemäß Figur 3 ausführt.

Ausgehend von einer waagrechten Position des Pflanzenteils F wird dieser somit mittels des Pflanzentransportmittels 13 in Richtung einer senkrechten Position gemäß Darstellung in Figur 3 bewegt, das heißt in Richtung der bevorzugten Einzugsorientierung der Pflanzenführungseinheit 7.

Aufgrund der Relativbewegung der Wuchshilfe 2 zu der Vorrichtung 1 und des Anhaftens des Pflanzenteils F an der Wuchshilfe 2 wird das Pflanzenteil F weiterhin der Pflanzenführungseinheit 7 angenähert, trifft auf diese jedoch in senkrecht oder nahezu senkrechter Ausrichtung gemäß der Darstellung in Figur 3 auf und kann somit problemlos mit der Pflanzenführungseinheit 7 eingezogen werden.

Das als Förderschnecke ausgebildete Pflanzentransportmittel 13 weist in axialer Erstreckung eine Länge von etwa 60 cm auf mit einer Schneckensteigung von etwa 12,5 cm und einem Durchmesser von etwa 12,5 cm.

Wesentlich ist, dass die Förderschnecke in Endbereichen (Bezugszeichen G und H in Figur 1a) konisch zulaufend ausgebildet ist (in den Figuren nicht dargestellt).

In den genannten Bereichen G und H verringert sich der Durchmesser der Schnecke kontinuierlich zu dem jeweiligen Ende der Achse der Schnecke hin.

Ohne eine solche Ausgestaltung besteht ein höheres Risiko, dass an den Endbereichen des als Förderschnecke ausgebildeten Transportmittels des Pflanzentransportmittels 13 sich Pflanzenteile um die Förderschnecke herumwickeln. Durch die konische Ausgestaltung wird ein solcher Fehler nahezu ausgeschlossen.

Der Teil des als Förderschnecke ausgebildeten Pflanzentransportmittels 13 wird mittels des dritten Motors 14 mit einer Umdrehungsgeschwindigkeit von etwa 220 U/min betrieben.

Mit der erfindungsgemäßen Vorrichtung und dem erfindungsgemäßen Verfahren wird somit ein wesentliches Fehlerpotential beim maschinellen Entfernen von Pflanzenteilen von mindestens einer Wuchshilfe beseitigt, indem mittels der Pflanzenausrichteinheit von der Wuchshilfe abstehende Pflanzenteile in Richtung einer bevorzugten Einzugsorientierung der Pflanzenführungseinheit bewegt werden.

## Patentansprüche

1. Vorrichtung (1) zum Entfernen von Pflanzenteilen von mindestens einer länglichen, zugstabilen, biegeschlaffen Wuchshilfe (2) während einer Bewegung der Vorrichtung (1) entlang der Wuchshilfe (2) ,insbesondere zum Entfernen von Rebentrieben von mindestens einem Spalierdraht, umfassend
- eine Wuchshilfeführung (3), zum Führen der Wuchshilfe (2) während der Bewegung der Vorrichtung (1) entlang der Wuchshilfe (2),
- eine Ablöseeinheit (4) und
- eine Pflanzenführungseinheit (7) zum Komprimieren und/oder Zuführen der an der Wuchshilfe (2) anhaftenden Pflanzenteile zu der Ablöseeinheit,
welche Ablöseeinheit (4) mindestens ein Ablöseelement umfasst, welches Ablöseelement derart beweglich an der Vorrichtung (1) angeordnet ist, dass bei Betrieb durch Bewegung des Ablöseelementes Pflanzenteile von der Wuchshilfe (2) zumindest teilweise ablösbar sind,
**dadurch gekennzeichnet,**
**dass** die Vorrichtung (1) zusätzlich mindestens eine Pflanzenausrichteinheit mit mindestens einem motorisch angetriebenen Pflanzentransportmittel (13) umfasst,
welche Pflanzenausrichteinheit vor der Pflanzenführungseinheit (7) angeordnet ist, hinsichtlich der Relativbewegung der Wuchshilfeführung zu der Vorrichtung (1) und
welche Pflanzenausrichteinheit derart angeordnet und dazu ausgebildet ist, mittels des Pflanzentransportmittels (13) von der Wuchshilfe (2) abstehende Pflanzenteile in Richtung einer bevorzugten Einzugsorientierung der Pflanzenführungseinheit (7) zu bewegen.

2. Vorrichtung (1) nach Anspruch 1,
**dadurch gekennzeichnet,**
**dass** die Pflanzenausrichteinheit derart angeordnet und dazu ausgebildet ist, mittels des Pflanzentransportmittels (13) von der Wuchshilfe (2) abstehende Pflanzenteile zu drehen, insbesondere,
**dass** Drehung um eine Drehachse erfolgt, welche Drehachse in etwa mit der Längsachse der Wuchshilfe (2) im Bereich der Pflanzenausrichteinheit übereinstimmt.

3. Vorrichtung (1) nach einem der vorangegangenen Ansprüche,
**dadurch gekennzeichnet,**
**dass** das Pflanzentransportmittel (13) als lineares Fördermittel ausgebildet ist.

4. Vorrichtung (1) nach Anspruch 3,
**dadurch gekennzeichnet,**
**dass** das Pflanzentransportmittel (13) als Förderschnecke ausgebildet ist, insbesondere,
**dass** die Förderschnecke an einem Ende, bevorzugt an beiden Enden, konisch zulaufend ausgebildet ist.

5. Vorrichtung (1) nach Anspruch 4,
**dadurch gekennzeichnet,**
**dass** die Pflanzenausrichteinheit einen motorischen Antrieb zum Drehen der Förderschnecke umfasst, insbesondere,
**dass** der motorische Antrieb ausgebildet ist zum Drehen der Förderschnecke mit einer Umdrehungsgeschwindigkeit im Bereich 100 U/min bis 400 U/min, bevorzugt im Bereich 200 U/min bis 250 U/min.

6. Vorrichtung (1) nach einem der Ansprüche 4 bis 5,
**dadurch gekennzeichnet,**
**dass** die Förderschnecke einen Durchmesser im Bereich 3 cm bis 25 cm, bevorzugt im Bereich 5 cm bis 22 cm, weiter bevorzugt im Bereich 9 cm bis 20 cm aufweist und/oder
**dass** die Förderschnecke eine Ganghöhe im Bereich 10 cm bis 15 cm, bevorzugt etwa 12,5 cm aufweist.

7. Vorrichtung (1) nach einem der Ansprüche 3 bis 6,
**dadurch gekennzeichnet,**
**dass** das lineare Fördermittel mit Förderrichtung in einem vorgegebenen Winkel zu der bevorzugten Einzugsorientierung der Pflanzenführungseinheit (7) angeordnet ist, vorzugsweise in einem Winkel im Bereich 3° bis 20°, bevorzugt im Bereich 5° bis 15°, weiter bevorzugt etwa 9°.

8. Vorrichtung (1) nach einem der Ansprüche 3 bis 7,
**dadurch gekennzeichnet,**
**dass** der Winkel zwischen Förderrichtung des linearen Fördermittels und der bevorzugten Einzugsorientierung der Pflanzenführungseinheit (7) durch einen Benutzer wahlweise vorgebbar ist.

9. Vorrichtung (1) nach einem der Ansprüche 3 bis 8,
**dadurch gekennzeichnet,**
**dass** das lineare Fördermittel derart ausgebildet ist, dass bei Betrieb von dem Fördermittel erfasste Pflanzenteilbereiche nach oben bewegt werden.

10. Vorrichtung (1) nach einem der Ansprüche 3 bis 9,
**dadurch gekennzeichnet,**
**dass** der lineare Förderweg des Fördermittels eine Länge im Bereich von 0,3 m bis 1,2 m, bevorzugt im Bereich von 0,5 m bis 0,7 m aufweist.

11. Vorrichtung (1) nach einem der vorangegangenen Ansprüche,
**dadurch gekennzeichnet,**
**dass** die Pflanzenführungseinheit (7) ein Einzugsrad (7b) umfasst, mit einer bevorzugten Einzugsrichtung in etwa senkrecht zu der Drehachse des Einzugsrades.

12. Vorrichtung (1) nach einem der vorangegangenen Ansprüche,
**dadurch gekennzeichnet,**
**dass** das Pflanzentransportmittel (13) mit einem Abstand senkrecht zu einer die Pflanzenführungseinheit (7) durchlaufenden Wuchshilfe (2) kleiner 50 cm, bevorzugt im Bereich zwischen 5 cm und 30 cm, weiter bevorzugt im Bereich zwischen 10 cm und 20 cm zu der Pflanzenführungseinheit (7) angeordnet ist.

13. Vorrichtung (1) nach einem der vorangegangenen Ansprüche,
**dadurch gekennzeichnet,**
**dass** das Pflanzentransportmittel (13) mit einem Abstand in Richtung der Längserstreckung einer die Pflanzenführungseinheit (7) durchlaufenden Wuchshilfe (2) kleiner 50 cm, bevorzugt im Bereich zwischen 5 cm und 30 cm, weiter bevorzugt im Bereich zwischen 10 cm und 20 cm zu der
Pflanzenführungseinheit (7) angeordnet ist.

14. Verfahren zum Entfernen von Pflanzenteilen von mindestens einer länglichen, zugstabilen, biegeschlaffen Wuchshilfe (2) mittels einer Vorrichtung (1 )während einer Bewegung der Vorrichtung (1)entlang der Wuchshilfe (2), insbesondere zum Entfernen von Rebentrieben von mindestens einem Spalierdraht,
folgende Verfahrensschritte umfassend:
- Komprimieren und/oder Zuführen von an der Wuchshilfe (2) anhaftenden Pflanzenteilen mittels einer Pflanzenführungseinheit (7) zu einer Ablöseeinheit,
- durch Bewegen eines Ablöseelementes der Ablöseeinheit (4) zumindest teilweises Ablösen der Pflanzenteile von der Wuchshilfe (2) und
- Führen der Wuchshilfe (2) während der Bewegung der Vorrichtung (1) entlang der Wuchshilfe (2) mittels einer Wuchshilfeführung (3),
**dadurch gekennzeichnet,**
**dass** vor dem Komprimieren und/oder Zuführen der Pflanzenteile mittels der Pflanzenführungseinheit (7) von der Wuchshilfe (2) abstehende Pflanzenteile mittels eines motorisch angetriebenen Pflanzentransportmittels (13) in Richtung einer bevorzugten Einzugsorientierung der Pflanzenführungseinheit (7) bewegt werden.

15. Verfahren nach Anspruch 14,
**dadurch gekennzeichnet,**
**dass** mittels des Pflanzentransportmittels (13) von der Wuchshilfe (2) abstehende Pflanzenteile gedreht werden, insbesondere,
**dass** die Drehachse in etwa mit der Längsachse der Wuchshilfe (2) im Bereich der Pflanzenausrichteinheit übereinstimmt.
